Europäisches Patentamt

European Patent Office

Office européen des brevets

(11) Publication number: **0 153 899**
**B1**

## (12) EUROPEAN PATENT SPECIFICATION

(45) Date of publication of patent specification: **26.10.88**

(21) Application number: **85630014.0**

(22) Date of filing: **26.02.85**

(51) Int. Cl.⁴: **B 60 C 11/06**

(54) Tire treads with variable depth grooves.

(30) Priority: **27.02.84 US 584191**

(43) Date of publication of application:
**04.09.85 Bulletin 85/36**

(45) Publication of the grant of the patent:
**26.10.88 Bulletin 88/43**

(84) Designated Contracting States:
**DE FR GB IT LU**

(56) References cited:
**EP-A-0 069 464**
**DE-A-2 029 844**
**FR-A-2 338 814**
**US-A-4 271 885**

(73) Proprietor: **THE GOODYEAR TIRE & RUBBER COMPANY**
**1144 East Market Street**
**Akron, Ohio 44316-0001 (US)**

(72) Inventor: **Goergen, René**
**38, Avenue Gordon Smith**
**Colmar-Berg (LU)**

(74) Representative: **Weyland, Joseph Jean Pierre**
**Goodyear Technical Center Luxembourg Patent Department Avenue Gordon Smith**
**L-7750 Colmar-Berg (LU)**

Courier Press, Leamington Spa, England.

**Description**

Background of the invention

This invention relates to tire treads and more particularly to tire treads according to the introductory clause of patent claim 1. Such a tire is for example described in DE—A—2 029 844.

Tires, especially truck tires with circumferential zig-zag ribs have been observed to be susceptible to a type of uneven wear generally referred to as "river wear". This type of wear which can be observed on trucks running on highways, is characterized in that the protruding portions of the ribs wear faster than the recessed portions of te ribs. It is generally believed that this type of wear is caused by excess stresses localized at the protruding portions of the ribs. It is furthermore believed that by making the rib peaks more flexible as compared to the rib corners, the uneven wear can be reduced to a great extent. Prior art document DE—A—2 029 844, for example, proposes to selectively influence the flexibility of the ribs through a change in inclination of the sidewalls of the grooves. From another prior art document EP—A—0 069 464 it is known to obtain the desired localized flexibility of the rib peaks by providing one or more grooves with a supporting buttress of varying height or width. The provision of such a buttress provides a varying degree of support for each groove sidewall along the length of the groove.

The present invention provides the desired localized flexibility by varying the depth of the zig-zag grooves in the circumferential direction of the tire such that they are deepest at the vertices of the projecting angles of the ribs and shallowest at the vertices of the reentrant angles of the ribs.

There is provided in accordance with the invention a tire having a tread characterized in that the base of said groove consists of a surface which is disposed at a radially measured distance from the ground-engaging surfaces of the ribs (groove depth) which varies in the circumferential direction of the tire and which radially measured distance is at a maximum at the vertex of each of the projecting angles and at a minimum at the vertex of each of the reentrant angles of the ribs.

Brief description of the drawings

An understanding of additional aspects of the invention can be gained from a consideration of the following detailed description of representative embodiments thereof; in conjunction with the appened figures, wherein:

Fig. 1 is a fragmentary plan view of a tire tread embodying the invention;

Figs. 2, 3 and 4 are enlarged cross-sectional views taken along the lines 2—2, 3—3 and 4—4 respectively of Fig. 1;

Description of the preferred embodiments

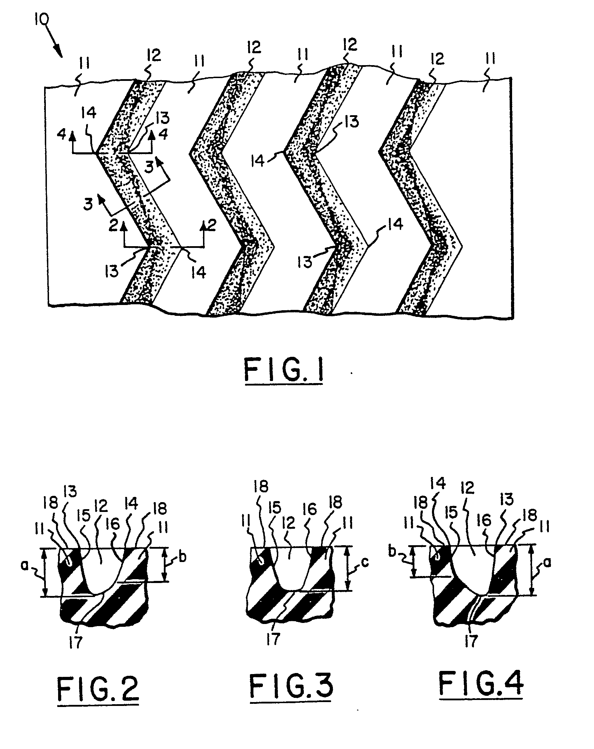

Fig. 1 shows a portion of a tread 10 of a pneumatic tire which is generally used on medium and heavy trucks. The tread comprises a plurality of circumferentially extending ribs 11 which are separated by circumferentially extending zig-zag grooves 12. As used herein and the appended claims, "zig-zag" refers to an undulating or sinusoidal pattern as well as to the conventional pattern of a series of adjacent straight segments alternating in direction with respect to the axis of rotation of the tire.

Each rib 11 that has a ground-engaging surface with an axial edge defining a zig-zag groove 12 has a series of alternating projecting angles 13 and reentrant angles 14. In a newly molded tire the portion of the radially outer surface 18 of a rib located in the area included by a projecting angle will engage the ground when the tire is mounted upon a wheel and inflated and subjected to its rated load. As used herein the vertex of an angle means a point where a respective groove wall makes a change in direction with respect to the axis of rotation of the tire. As may be seen in Figs. 2, 3 and 4, a zig-zag groove in accordance with this embodiment of the invention has a pair of groove walls 15, 16 connecting the groove base 17 with a ground-engaging surface 18 of the rib or ribs 11 that define the groove.

As used herein, the distance from the surface of the groove base to the distance from the surface of the tread means the distance such as measured in the radial direction, i.e. perpendicular to the axis of rotation of the tire, from a particular point on to the base or floor of the groove to the ground-engaging surface of the tread. This distance is referred to as the "depth" of the groove.

The radially measured distance from the surface of the groove base to the ground-engaging surface of the tread, may either vary continuously or step-wise; that is to say, the groove base may be either a continuously warped surface or a surface that is both stepped in the circumferential direction of the tire and tapered in the axial direction. It is preferable that the grooves have a greater width at the ground-engaging surfaces of the tread that at the groove base, and that the angle each groove wall 15, 16 forms with respect to a line perpendicular to the ground-engaging surface of the tread remains constant around the circumference of the tire.

It is believed that by having the projecting angles 13 of the ribs 11 more flexible than the reentrant angles 14 by locating the maximum depth of a groove at the vertices of the projecting angles, the concentration of the stresses at the projecting angles as they pass through the footprint of a rotating tire will at least be reduced. At the same time, the reentrant angles 14 of the ribs are made less flexible than the projecting angles by locating the minimum depth of the groove at the vertex of the reentrant angle. In other words, it is believed that a tire according to the invention will have ribs with projecting and reentrant angles that wear at rates which are closer to each other than those of prior art tires. It is an advantage that with the tire of the invention this relationship of greater groove depth at the vertices of the projecting angle than at the vertices of the reentrant angles will continue throughout the useful life of the tire. The "useful life" of a tire is considered to be over when the tire is worn so that wear indicators molded into the tread begin to engage the ground in normal use on a road.

Referring to Figs. 2, 3 and 4 which are cross secional views along the lines 2—2, 3—3 and 4—4 respectively of Fig. 1 of a groove 12, on a larger scale than in Fig. 1, the continuously varying depth of the groove can be clearly seen. The embodiment of the invention wherein the depth of the groove varies stepsize is not illustrated in the drawing. Figs. 3 is a cross section of a groove 12 at a location midway between the ends of one leg of the zig-zag groove. The groove base 17 in Fig. 3 has a depth $c$ that is preferably the nominal depth, or non-skid depth of the groove. Fig. 2 is a cross-section of the same groove located at the vertices of both a projecting angle 13 of a first rib and the associated re-entrant angle 14 of a second rib, with the two ribs defining the edges of the groove. The groove in Fog. 2 has a maximum depth $a$ at the vertex of the projecting angle of the first rib and a minimum depth $b$ at the vertex of the re-entrant angle of the second rib. In a newly molded heavy duty pneumatic tire the maximum depth $a$ of the groove should be no more than about 5 millimeters greater than the nominal depth $c$ of the groove and the minimum depth $b$ of the groove should be no more than about 5 millimeters less than the nominal depth $c$ of the groove. In other words, the maximum depth of the groove should be no more than 10 millimeters greater than its minimum depth, and preferably the maximum and minimum depths should not vary by more than 3.5 millimeters from the nominal depth. For example, if the nomimal depth of the groove is 13 millimeters, then the depth of the groove at the vertex of each projecting angle should be no more than 18 millimeters, and the depth of the groove at the vertex of each re-entrant angles should be no less than 8 millimeters.

Fig. 4 is a cross-section of the same groove shown in Figs. 2 and 3 taken along line 4—4 of Fig. 1 such that the rib that was presenting the vertex of a projecting angle in Fig. 2 is now presenting the vertex 14 of a reentrant angle and the rib that was presenting the vertex of a reentrant angle in Fig. 2 is now presenting the vertex 13 of a projecting angle. It is clear that in Fig. 4, the depth of the groove is once again a maximum at the vertex of the projecting angle and a minimum at the vertex of the re-entrant angle due to the continuously varying depth of the warped surface of the groove base 17.

## Claims

1. A tire having a tread (10) comprising a pair of circumferentially extending ribs (11) sepearated by a circumferentially extending zig-zag groove (12) of as generally U or V-shaped cross section, said groove (12) having a base (17) and a pair of substantially straight walls (15, 16) repectively associated with the pair of ribs (11), each wall (15, 16) extending uniterrupted from the base (17) of the groove to a ground-engaging surface (18) of the respective rib having a series of alternately projecting (13) and reentrant (14) angles with the vertices of the angles located at points where the respective groove walls make changes in the direction with respect to the axis of rotation of the tire, characterized in that the base (17) of said groove (12) consists of a surface which is disposed at a radially measured distance (depth a, b, c) from the ground-engaging surfaces (18) of the ribs (11) which varies in the circumfernetial direction of a tire and which radially measured distance (a, b, c) is at a maximum (a) at the vertex of each of the projecting angles (13) and at a minimum (b) at the vertex of each of the reentrant angles (14) of the ribs (11).

2. A tire according to claim 1 characterized in that the base (17) of the groove (12) consists of a warped surface whereby the radially measured distance (a, b, c) from the ground-engaging surface (18) of the ribs (11) to the warped surface of the base (17) of the groove (12) varies continuously in the circumferential direction of the tire.

3. A tire according to claim 1 characterized in that the base (17) of the groove (12) consists of a stepped surface whereby the radially measured distance from the ground-engaging surface (18) of the ribs to the stepped surface of the base of the groove varies stepwise in the circumferntial direction of the tire.

4. A tire according to any one of claims 1 through 3 characterized in that the maximum distance (a) is not more than 10 mm greater than the minimum distance (b).

## Patentansprüche

1. Reifen mit einer Lauffläche (10) mit einen Paar von sich in Umgangsrichtung erstreckenden Rippen (11), die durch eine sich in Umfangsrichtung erstreckende zickzackförmige Rille (12) von im allgemeinen U- oder V-förmigem Querschnitt getrennt sind, wobei die Rille (12) eine Basis (17) und ein Paar von im wesentlichen geraden Wänden (15, 16) aufweist, die dem Paar aus den Rippen (11) zugeordnet sind, wobei jede Wand (15, 16); sich ununterbrochen von der Basis (17) der Rille zu einer auf dem Boden angreifenden Fläche (18) der jeweiligen Rippe erstrckt, wobei jede Rippe eine Reihe von abwechselnd vorspringenden (13) und einspringenden (14) Winkeln aufweist, wobei die Scheitelpunkte der Winkel an Punkten angeordnet sind, an welchen die jeweilige Rillenwand ihre Richtung gegenüber der Drehachse des Reifens ändert, dadurch gekennzeichnet, daß die Basis (17) der Rille (12) aus einer Fläche besteht, welche in einem in Radialrichtung gemessenen Abstand (Tiefe a, b, c) von den den Boden berührenden Flächen (18) der Rippen (11) angeordnet ist, welcher in Umfangsrichtung des Reifens variiert und daß der in Radialrichtung gemessene Abstand (a, b, c) ein Maximum (a) an dem Scheitelpunkt jedes vorspringenden Winkels (13) und ein Minimum (b) an dem Scheitelpunkt jedes einspringenden Winkels (14) der Rippen (11) ist.

2. Reifen nach Anspruch 1, dadurch gekennzeichnet, daß die Basis (17) der Rille (12) aus einer verwundenen Fläche besteht, wobei sich der in Radialrichtung gemessene Abstand (a, b, c) von der den Boden berührend Fläche (18) der Rippen (11) zu der gewundenen Fläche der Basis (17) der Rille (12) kontinuierlich in Umfangsrichtung des Reifens verändert.

3. Reifen nach Anspruch 1, dadurch gekennzeichnet, daß die Basis (17) der Rille (12) aus einer abgestuften Fläche besteht, wobei sich der in Radialrichtung gemessene Abstand von der den Boden berührenden Fläche (18) der Rippen zu der abgestufen Fläche der Basis der Rille stufenweise in Umfangsrichtung des Reifens verändert.

4. Reifen nach einem der Ansprüche 1 bis 3, dadurch gekennzeichnet, daß der maximale Abstand (a) nicht mehr als 10 mm größer ist als der minimale Abstand (b).

**Revendications**

1. Bandage pneumatique ayant une bande de roulement (10) comprenant deux nervures (11) s'étendant dans le sens circonférentiel et séparées par une rainure en zigzag (12) slétendant dans le sens circonférentiel et ayant une section transversale généralement en U ou en V, cette rainure (12) ayant une base (17) et deux parois (15, 16) pratiquement rectilignes respectivement associées aux deux nervures (11), chaque paroi (15, 16) s'étendant de manière ininterrompue de la base (17) de la rainure jusqu'à une surface (18) de la nervure repective, qui vient s'engager sur le sol, chaque nervure ayant une série d'angles alternés saillants (13) et rentrants (14) dont les sommets sont situés à des points où les parois respectives des rainures changent de direction par rapport à l'axe de rotation du bandage pneumatique, caractérisé en ce que le base (17) de la rainure (12) est constituée d'une surface qui est disposée à une distance mesurée radialement (profundeur a, b, c) des surfaces (18) des nervures (11), qui viennent s'engager sur le sol, variant dans le sens circonférentiel du bandage pneumatique, cette distance mesurée radialement (a, b, c) atteignant un maximum (a) au sommet de chacun des angles saillants (13) et un minimum (b), au sommet de chacun des angles rentrants (14) des nervures (11).

2. Bandage pneumatique selon la revendications 1, caractérisé en ce que la base (17) de la rainure (12) est constituée d'une surface gauchie de telle sorte que la distance (a, b, c) (mesurée radialement) entre la surface (18) des nervures (11), qui vient s'engager sur le sol, et la surface gauchie de la base (17) de la rainure (12), varie continuellement dans le sens circonférentiel du bandage pneumatique.

3. Bandage pneumatique selon la revendications 1, caractérisé en ce que la base (17) , de la rainure (12) est constituée d'une surface en gradins de telle sorte que la distance (mesurée radialement) entre la surface (18) des nervures, qui vient s'engager sur le sol, et la surface en gradins de la base de la rainure varie progressivement dans le sens circonférentiel du bandage pneumatique.

4. Bandage pneumatique selon l'une quelconque des revendications 1 à 3, caractérisé en ce que la distance maximale (a) ne dépasse pas de plus de 10 mm la distance minimale (b).

FIG. I

FIG.2  FIG.3  FIG.4